# EUROPEAN PATENT APPLICATION

(11) **EP 3 644 256 A1**
(43) Date of publication of application: **29.04.2020**
(21) Application number: 18844892.2
(22) Date of filing: 01.08.2018
(51) Int. Cl.: G06Q 20/38, G06F 21/30

(54) **SCREEN OUTPUT METHOD AND PROGRAM FOR VIRTUAL CODE GENERATED FROM PAYMENT CARD, AND PAYMENT CARD FOR GENERATING VIRTUAL CODE**

(30) Priority: 09.08.2017 KR 20170100953; 13.07.2018 KR 20180081707
(71) Applicant: SSenStone Inc., Seoul 08389 (KR)
(72) Inventor: YOO, Chang Hun, Seoul 07050 (KR)
(74) Representative: Zardi, Marco
(86) International application number: PCT/KR2018/008741
(87) International publication number: WO 2019/031761

(57) **Abstract**

A method and a program for outputting a virtual code generated from a payment card, and a payment card for generating a virtual code are provided. The method for outputting the virtual code generated from the payment card includes receiving, by a virtual code output application, a virtual code from a payment card after connecting the payment card with a mobile terminal through short-range wireless communication, and outputting, by the virtual code output application, the virtual code on the screen.

## Description

### BACKGROUND

Embodiments of the inventive concept disclosed herein relate to a method and a program for outputting a virtual code, which is generated from a payment card, on a screen, and the payment card for generating the virtual code, and more particularly to a method for transmitting a virtual code generated from a payment card to a mobile terminal and outputting the virtual code on a screen, and a payment card for the same.

Data in the form of a code has been used in many fields. The data in the form of the code includes, an Internet Personal Identification Number (IPIN) and a social security number for user identification, as well as a card number and an account number used for payment.

However, many accidents occur in the process of using such code data. In the case of the card number, since the real card number is written on the surface of the card, the real card number is visually leaked to another person, and is transmitted to a Point of Sales (POS) terminal without change in payment using a magnetic manner.

Although many attempts have been made to use a virtual card number or a virtual token to prevent the real card number from being leaked, there is required data for identifying a user to detect a real card number corresponding to the virtual card number or virtual token. For example, in the case of One Time Password (OTP), although a code is changed and generated every time, a login procedure is required to determine an algorithm assigned to a user. Accordingly, it is difficult to apply the OTP to various fields. Accordingly, there is required an invention that may detect a real card number based on a virtual card number changed in real time, without providing identification information for a user or device corresponding to the real card number.

### SUMMARY

The payment card, which generates the virtual code, has no display on the surface, so the generated virtual code may not be visually identified. In general, although the direct identification of the virtual code is unnecessary when payment is performed offline, there is a difficulty in online payment or offline payment requiring direct input of code data.

Embodiments of the inventive concept provide a method and a program for outputting a virtual code, which is generated from a payment card, on a screen, which enables a user to identify the virtual code generated form the payment card having no display, through a mobile terminal of the user, and a payment card for generating a virtual code.

The objects of the inventive concept are not limited to the above, but other effects, which are not mentioned, will be apparently understood to those skilled in the art.

According to an exemplary embodiment, a method for outputting a virtual code, which is generated from a payment card, on a screen includes receiving, by a virtual code output application, the virtual code from the payment card after connecting the payment card with a mobile terminal through short-range wireless communication, and outputting, by the virtual code output application, the virtual code on the screen. The virtual code output application is installed or embedded in the mobile terminal. The virtual code is generated as a code matched to a real card number through a virtual code generating function, which is stored in the payment card, at every unit count, and is used to detect the real card number in a financial company server or a virtual token verifying server. The unit count is set as a specific time interval and changed as the specific time interval is elapsed.

According to an exemplary embodiment, the virtual code output application is activated when the short-range wireless communication is made between the payment card and the mobile terminal as the virtual code output application is run in the background in the mobile terminal.

According to an exemplary embodiment, a method for outputting a virtual code, which is generated from a payment card, on a screen, includes synchronizing, by a virtual code output application, time of an encryption algorithm through wireless communication between a virtual code output application and the payment card, receiving, by the virtual code output application, an encrypted code generated from the payment card, wherein the encrypted code is obtained by encrypting the virtual code generated from the payment card based on the synchronized encryption algorithm, decrypting, by the virtual code output application, the encrypted code to the virtual code based on the encryption algorithm, and outputting, by the virtual code output application, the virtual code on the screen. The virtual code is generated as a code matched to a real card number through a virtual code generating function, which is stored in the payment card, at every unit count, and is used to detect the real card number in a financial company server or a virtual token verifying server, and the unit count is set as a specific time interval and changed as the specific time interval is elapsed.

According to an exemplary embodiment, the encryption algorithm is matched to an encryption rule every time.

According to exemplary embodiment, the payment card generates at least one detailed code through at least one detailed code generating function, and generates the virtual code by combining the at least one detailed code through a detailed code combining function. The detailed code generating function and the detailed code combining function are included in the virtual code generating function. The at least one detailed code includes a first code to set a starting point of searching for a storage position, and a second code to set a search path to the storage position from the starting point according to a specific searching scheme.

According to an exemplary embodiment, a method for outputting a virtual code, which is generated from a payment card, on a screen, includes receiving, by a second virtual code generating module, a virtual security code from a first virtual code generating module, generating, by the second virtual code generating module, at least one detailed code through at least one detailed code generating function, generating, by the second virtual code generating module, the virtual code through combination of the at least one detailed code through at least one detailed code combining function, and outputting, by the second virtual code generating module the virtual code the screen. The virtual code is generated as a code matched to a real card number through a virtual code generating function, which is stored in the payment card, at every unit count, and is used to detect the real card number in a financial company server or a virtual token verifying server. The virtual code generating function includes the detailed code generating function and the detailed code combining function. The first virtual code generating module is included in the payment card, and the mobile terminal is embedded therein or installed with a virtual code output application including the second virtual code generating module. The second virtual code generating module generates a plurality of detailed codes matched to a unit count in which generation of the virtual code is requested using the virtual security code, generates the virtual code by combining the plurality of detailed codes, and outputs the virtual code on the screen. The unit count is set as a specific time interval and changed as the specific time interval is elapsed.

According to an exemplary embodiment, the plurality of detailed codes include a first code generated based on a first count, and a second code generated based on a second count. The first count is the number of unit counts elapsed from an initial time point at which the virtual code generating function is run in a virtual code verifying server, the second count is the number of unit counts elapsed from a time point at which a real card number of a specific user is issued, and the generating of the at least one detailed code includes applying the virtual security code to the second count or the number of counts elapsed from a current time point.

According to an exemplary embodiment, the method may further include providing, by the virtual code output application, the virtual code to a clipboard. The virtual code provided on the clipboard is input to an online payment page in response to an operation of a user.

According to an exemplary embodiment, a payment card includes a virtual code generating unit to generate a virtual code, and a virtual code transmitting unit to transmit the virtual code to a mobile terminal after recognizing connection with the mobile terminal through short-range wireless communication. The mobile terminal outputs, on a screen, the virtual code received from a payment card through a virtual code output application, the virtual code is generated as a code matched to a real card number through a virtual code generating function, which is stored in the payment card, at every unit count, and is used to detect the real card number in a financial company server or a virtual token verifying server, and the unit count is set as a specific time interval and changed as the specific time interval is elapsed.

According to an exemplary embodiment, a payment card includes a virtual code generating unit to generate a virtual code at every unit count through a virtual code generating function, a timer to synchronize time of an encryption algorithm through wireless communication with a mobile terminal, an encrypted code generating unit to generate an encrypted code from the virtual code based on the synchronized encryption algorithm, a wireless communication unit to transmit the encrypted code to the mobile terminal through wireless communication. The wireless communication unit transmits synchronization condition data to the mobile terminal or receives the synchronization condition data from the mobile terminal, the mobile terminal outputs, on a screen, the virtual code received from a payment card through a virtual code output application, the virtual code is generated as a code matched to a real card number through the virtual code generating function, which is stored therein, at every unit count, and is used to detect the real card number in a financial company server or a virtual token verifying server, and the unit count is set as a specific time interval and changed as the specific time interval is elapsed.

According to an exemplary embodiment, a payment card includes a first virtual code generating module. The first virtual code generating module includes a virtual security code generating unit to generate a virtual security code using a time value and a card security code of a real card number, in which the virtual security code is a disposable code having a specific digit number, and a wireless communication unit to transmit the virtual security code to a mobile terminal. The mobile terminal is embedded or installed with a virtual code output application including a second virtual code generating module, the second virtual code generating module generates a plurality of detailed codes matched to a unit count in which generation of the virtual code is requested using the virtual security code, generates the virtual code by combining the plurality of detailed codes, and outputs the virtual code on the screen. The virtual code is generated as a code matched to a real card number through a virtual code generating function, which is stored in the payment card, at every unit count, and is used to detect the real card number in a financial company server or a virtual token verifying server, and the unit count is set as a specific time interval and changed as the specific time interval is elapsed.

### BRIEF DESCRIPTION OF THE FIGURES

The above and other objects and features will become apparent from the following description with reference to the following figures, wherein like reference numerals refer to like parts throughout the various figures unless otherwise specified, and wherein:
FIG. 1 is a flowchart illustrating a method for outputting a virtual code, which is generated from a payment card, on a screen according to an embodiment of the inventive concept;
FIG. 2 is a flowchart illustrating a method for outputting a virtual code, which is generated from a payment card, on a screen according to another embodiment of the inventive concept;
FIG. 3 is a flowchart illustrating a procedure of generating an encrypted code after generating a virtual code from a payment card;
FIG. 4 is a flowchart illustrating a method for outputting a virtual code, which is generated from a payment card, on a screen according to another embodiment of the inventive concept;
FIG. 5 is a flowchart illustrating a method for outputting a virtual code, which is generated from a payment card, on a screen, in which the method further includes providing the virtual code to a clipboard, according to another embodiment of the inventive concept;
FIG. 6 is a block diagram illustrating the internal structure of a payment card to transmit a virtual code through short-range wireless communication, according to another embodiment of the inventive concept;
FIG. 7 is a block diagram illustrating the internal structure of a payment card to transmit an encrypted code based on a virtual code, according to still another embodiment of the inventive concept; and
FIG. 8 is a block diagram illustrating the internal structure of a payment card to transmit a virtual security code according to another embodiment of the inventive concept.

### DETAILED DESCRIPTION

Hereinafter, an exemplary embodiment of the inventive concept will be described with reference to accompanying drawings. Advantage points and features of the inventive concept and a method of accomplishing the same will become apparent from the following description made with reference to accompanying drawings. The inventive concept, however, may be embodied in various different forms, and should not be construed as being limited only to the illustrated embodiments. Rather, these embodiments are provided as examples so that this disclosure will be thorough and complete, and will fully convey the concept of the inventive concept to those skilled in the art. The inventive concept may be defined by scope of the claims. Meanwhile, the terminology used herein to describe embodiments of the invention is not intended to limit the scope of the inventive concept. Like reference numerals refer to like elements throughout the whole specification.

Unless otherwise defined, all terms (including technical and scientific terms) used herein have the same meaning as commonly understood by those skilled in the art. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The terminology used in the inventive concept is provided for the illustrative purpose, but the inventive concept is not limited thereto. As used herein, the singular terms "a," "an" and "the" are intended to include the plural forms as well, unless the context clearly indicates otherwise. Furthermore, it will be further understood that the terms "comprises", "comprising," "includes" and/or "including", when used herein, specify the presence of stated elements, steps, operations, and/or devices, but do not preclude the presence or addition of one or more other components, steps, operations and/or devices.

Herein, a 'character' is an element to form a code, and includes an entire portion or some of an uppercase alphabet, a lowercase alphabet, a number, and a special character.

Herein, a 'code' refers to a character string in which characters are listed.

Herein, a 'card number', which is used for a financial transaction, such as payment, is a number assigned to a card, and transmitted to a card company in the situation of payment or the cancellation of the payment.

Herein, a 'real card number' is a number assigned to a card of a specific user by a card company. In other words, the 'real card number' refers to a number assigned to a general actual card or a mobile card.

Herein, a 'virtual code' is a card number temporarily generated to be connected to a real card number, and is a code having a specific digit number, which is formed using characters including numbers. The virtual code includes a virtual card number used to detect a real card number in a financial company server, a virtual token used to detect the real card number in a virtual token verification server.

Herein, the 'detailed code' refers to some code included in the virtual token. In other words, when the virtual token is generated by combining a plurality of separately generated codes, the detailed code refers to a individual code separately generated and constituting the virtual token.

Herein, a 'unit count' is set as a specific time interval and changed as the specific time interval is elapsed. For example, 'count 1' may be set as a specific time interval (for example, 1.5 seconds) and used.

Herein, a 'virtual code generating function' refers to a function used to generate a virtual token.

Herein, a 'detailed code generating function' refers to a function of generating each detailed code constituting the virtual code number.

Herein, a 'detailed code combining function' refers to a function of generating a virtual code (for example, a virtual card number or a virtual token) obtained by combining or linking a plurality of detailed codes.

Herein, a 'mobile terminal' includes various devices to provide a result for a user by performing an arithmetic operation. For example, a computer may correspond to, as well as a desktop personal computer (PC) or a notebook, a smartphone, a tablet PC, a cellular phone, a personal communication service (PCS) phone, a mobile terminal of a synchronous/asynchronous international mobile telecommunication (IMT-2000), a palm personal computer, or a personal digital assistant (PDA).

Herein, a 'payment card' refers to an entire portion or a portion of the virtual code generating function.

Herein, a 'payment service server' includes all servers of providers linking or assisting a payment service between a virtual token verifying server or a financial company server in a virtual token generating device or a POS terminal. In other words, the payment service server may correspond to a payment gateway (a service provider that performs transactions with a financial institution on the Internet), a payment agency (VAN company), or a server of Acquirer.

Herein, a 'financial company server' refers to a server that determines whether to approve payment based on the real card number.

Herein, a 'virtual token verifying server' refers to a server that detects a real card number based on a virtual token and transmits the real card number to the payment service server or the financial company server.

Herein, a 'virtual code output application', which is an application installed or embedded in a mobile terminal, outputs a virtual code on a screen.

Herein, 'short-range wireless communication' refers to wireless communication performed as a terminal, which is spaced, comes into contact or proximity. For example, 'short-range wireless communication' refers to a scheme in which a plurality of terminals make wireless communication at distances where users manually control the terminals while personally determining communication states.

Herein, a 'virtual code generating module' refers to a module to generate a virtual code in the form provided to a virtual code verifying server. Herein, the 'virtual code generating module' may be divided into a plurality of detailed modules depending on functions. The detailed modules included in the virtual code generating module may be included in one terminal device or may be separately included in individual terminal devices.

Herein, a 'first virtual code generating module' refers to a module to generate a virtual security code used to generate the virtual code.

Herein, a 'second virtual code generating module' refers to a module to generate a virtual code using the virtual security code generated from the first virtual code generating module. In other words, the 'second virtual code generating module' includes a detailed code generating function and a detailed code combining function.

Hereinafter, the configuration of a real card number will be described to illustrate a procedure of generating and outputting a virtual code which is a substitute of the real card number, according to an embodiment of the inventive concept.

The 'real card number' includes at least one of a card identification (ID) number, a card security code, and a card validity period. The card ID number is a code assigned to identify a card company, a card type, and a card user. In general, the card ID number assigned to a card has 15 or 16 digits. In general, in the case of a card ID number having 16 digits, the first 6 digits constitute the issuer identification number (IIN) of the card, the 7^{th} digit to the 15^{th} digit have codes assigned to each card according to an arbitrary rule, and the 16^{th} digit has a value for verifying the card ID number according to a specific formula.

The card security code is printed at one side of the card and has a specific digit number (for example, Visa and Master have three digits, and American Express has four digits). In other words, when the card security code has three digits, and the card ID number 16 digits, the card security code of a 3-digit code and the card ID number of a 16-digit code are encrypted/decrypted according to the specific rule. If the relevant values are matched, the card is verified as a normal card. The card security codes have different names depending on card companies. Accordingly, the card security code of Visa card is called Card Verification Value (CVV), the card security card of MasterCard/JCB is called Card Validation Code (CVC), and the card security code of American Express is called Confidential Identifier Number or Card Identification Number (CID).

The card validity period refers to a time limit that may be used after a real card number is issued. In general, in the card validity period, two digits are assigned to each of year and month fields to form a 4-digit code.

Hereinafter, a method and a program for outputting a virtual code generated from a payment card, and the payment card according to embodiments of the inventive concept will be described in detail with reference to accompanying drawings.

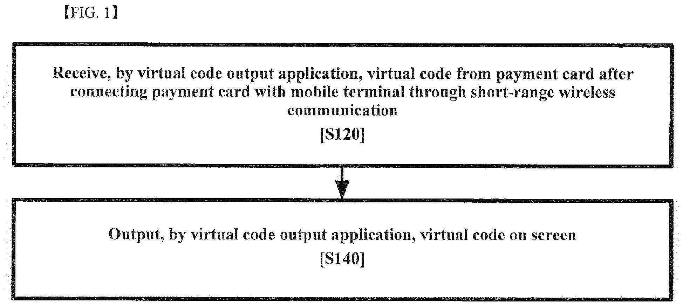

FIG. 1 is a flowchart illustrating a method for outputting the virtual code, which is generated from the payment card, on a screen, according to an embodiment of the inventive concept.

Referring to FIG. 1, according to an embodiment of the inventive concept, the method for outputting the virtual code generated from the payment card includes receiving, by a virtual code output application, the virtual code from the payment card after connecting the payment card with a mobile terminal through short-range wireless communication (S 120), and outputting, by the virtual code output application, the virtual code on the screen (S140).

The virtual code output application receives the virtual code from the payment card after connecting the payment card with the mobile terminal through short-range wireless communication (S120). The virtual code output application may receive the virtual code generated from the payment card as a user manipulates the mobile terminal or the payment card.

According to an embodiment, when the user manipulates the mobile terminal, the virtual code output application is run to transmit a request the payment card to provide the virtual code through short-range wireless communication (for example, NFC communication). Thereafter, when the payment card is connected with the mobile terminal through the short-range wireless communication, the payment card generates and transmits a virtual code corresponding to a relevant time point. The virtual code is generated as a code matched to a real card number through the virtual code generating function, which is stored in the payment card, at every unit count, and is used to detect the real card number in a financial company server or a virtual token verifying server.

In addition, according to another embodiment, when the user starts the procedure for outputting the virtual code by manipulating the payment card, the payment card receives a manipulation of activating the virtual code from the user. For example, the user may activate the payment card by operating a button provided on the surface of the payment card or by inputting an operation of shaking or tapping the payment card.

Thereafter, the payment card generates the virtual code and transmits the virtual code to the mobile terminal through short-range wireless communication. The virtual code is generated corresponding to a virtual code generation time point by the virtual code generating function stored in the payment card. In this case, the virtual code output application recognizes that that short-range wireless communication is made, as the payment card is in the proximity or contact to the mobile terminal after the payment card is activated. According to an embodiment, the virtual code output application is activated, when the short-range wireless communication is made between the payment card and the mobile terminal, as the virtual code output application is run in the background in the mobile terminal.

If the payment card transmits the virtual code through long-range wireless communication (for example, Bluetooth communication) rather than short-range wireless communication, there may occur a situation that another person intercepts the virtual code and uses the virtual code for payment. Accordingly, the short-range wireless communication is made between the payment card and the mobile terminal.

For example, when a user uses a mobile terminal case for inserting the payment card (for example, a smartphone case allowing the payment card to be inserted into the rear surface of a smartphone), the payment card and the mobile terminal is in contact with each other. Accordingly, the user may activate the payment card by manipulating the mobile terminal or the payment card, without performing a separate operation to bring the payment card into contact with the mobile terminal. In addition, for example, when there is a space for inserting the payment card in a case cover, and when the case cover is folded and placed on the rear surface of the mobile terminal, the payment card and the mobile terminal are in contact with each other in the state that the user views the screen of the mobile terminal. Accordingly, the user does not need to perform a separate operation to bring the payment card into contact with the mobile terminal.

In detail, when a user uses a mobile terminal case allowing the payment card to be inserted into the rear surface of the mobile terminal, the user may activate the payment card disposed on the rear surface of the mobile terminal by tapping the payment card with a finger of the user or pressing a button, and the payment card may generate a virtual code through a virtual code generating function stored in the payment card. Thereafter, a program (virtual code output program) for outputting the virtual code in the mobile terminal receives the virtual code from the payment card through short-range wireless communication. Since the mobile terminal and the payment card are in proximity to each other, the user does not need to perform a separate operation to bring the payment card into contact with the mobile terminal or to make the payment card in proximity to the mobile terminal.

The virtual code output application outputs the virtual code on the screen (S140). The virtual code output application includes a user interface for displaying the virtual code on the screen.

In addition, according to another embodiment, the virtual code output application further includes providing the virtual code to a clipboard. The virtual code output application may include a button for requesting the virtual code to be provided to the clipboard on the user interface for displaying the virtual code. The virtual code output application provides the clipboard such that the virtual code output on the screen is inserted into another program in response to the request of the user.

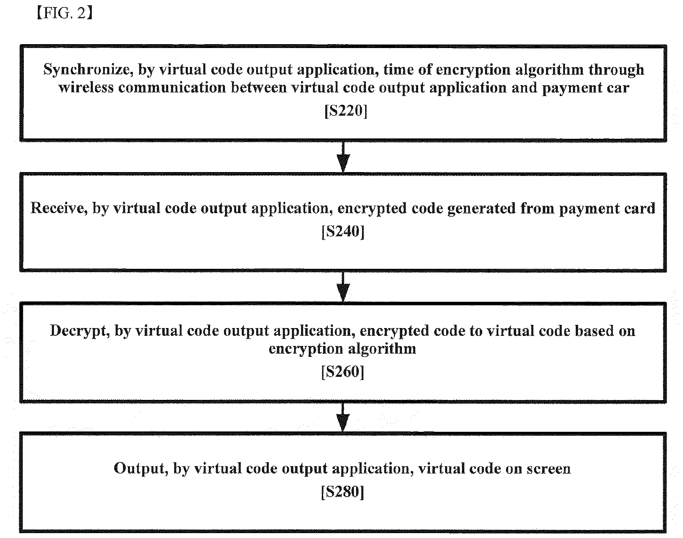

FIG. 2 is a method for outputting the screen of the virtual code generated from the payment card, according to another embodiment of the inventive concept.

Referring to FIG. 2, according to another embodiment of the inventive concept, the method for outputting the virtual code generated from the payment card includes synchronizing, by the virtual code output application, time of an encryption algorithm through wireless communication between the virtual code output application and the payment card (S220); receiving, by the virtual code output application, an encrypted code generated in the payment card (S240; encrypted code receiving step), decrypting, by the virtual code output application, the encrypted code to a virtual code based on the encryption algorithm (S260), and outputting, by the virtual code output application, the virtual code on the screen (S280). Hereinafter, the details of each step will be made.

The virtual code output application synchronizes the time of the encryption algorithm through the wireless communication between the virtual code output application and the payment card (S220). The payment card and the mobile terminal (that is, the virtual code output application) include the same encryption algorithm. Accordingly, the payment card generates the virtual code in the form of an encryption code as described below, and decrypts the received encryption code to recover the virtual code.

The virtual code generating module in the payment card and the mobile terminal (that is, the virtual code output application) may change the encryption algorithm (for example, may change an encryption pattern (or an encryption code change pattern) depending on a specific rule to prevent another person from obtaining a plurality of encryption codes, which are provided from the virtual code generating module to the mobile terminal, to find out the encryption algorithm.

For example, when the payment card receives the request to generate a virtual code from the virtual code output application or when the operation of requesting the payment card to generate the virtual code is input from a user, the payment card synchronizes the time with the mobile terminal (that is, the virtual code output application) such that the payment card (that is, the virtual code generating module) and the mobile terminal (that is, the virtual code output application) perform converting and recovering with the same encryption pattern. For example, the virtual code generating module in the payment card may perform synchronization to be matched to the time data of a clock included in the mobile terminal (that is, the virtual code output application).

Since the mobile terminal includes a global positioning system (GPS) module or a wireless communication module (for example, a Wi-Fi module or LTE module) that is able to communicate with an external server, the mobile terminal may accurately match the time data. However, since the payment card produces time, errors may occur. Accordingly, the time data in the mobile terminal may be mismatched from the time data in the payment card. Accordingly, the timers in the payment card and the mobile terminal need to be synchronized with each other such that the virtual code output application and the virtual code generating module perform encryption based on time data. The scheme of changing an encryption pattern by utilizing the time data will be described below.

The virtual code output application receives the encrypted code generated from the payment card (S240). The virtual code is generated as a code matched to a real card number through the virtual code generating function, which is stored in the payment card, at every unit count, and is used to detect the real card number in a financial company server or a virtual token verifying server.

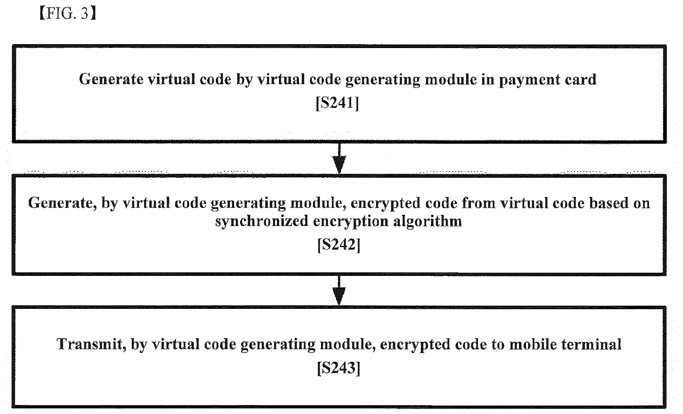

Referring to FIG. 3, the virtual code generating module in the payment card generates the virtual code (S241; virtual code generating step). The virtual code generating module may include the same virtual code generating function as that included in the virtual code verifying server (that is, the financial company server or a virtual token verifying server). Accordingly, the virtual code verifying server (for example, financial company server) may perform a financial transaction after receiving a virtual code, which is generated by the virtual code generating module in the payment card to be output to the outside in offline payment or is provided by the virtual code output application, and detecting a real card number.

The virtual code generating function generates the virtual code in various schemes. According to an embodiment, the virtual code generating step (S241) includes generating, by the virtual code generating module, at least one detailed code through at least one detailed code generating function, and generating, by the virtual code generating module, the virtual code by combining the at least detailed code through a detailed code combining function. In other words, the virtual code generating function includes the detailed code generating function and the detailed code combining function.

First, the virtual code generating module generates at least one detailed code through at least one detailed code generating function. For example, the virtual code generating module generates a first code and a second code by including a first function and a second function as the detailed code generating function.

According to an embodiment, in the scheme of generating the first code and the second code by the virtual code generating module, the plurality of detailed codes include a first code for setting a starting point for detecting a storage position of a real card number in the virtual code verifying server (for example, the financial company server or the virtual token verifying server); and a second code for setting a detecting path from the starting point to the storage position according to the specific detection scheme. Although the first code and the second code have the correlation for detecting the storage position of the real card number in the virtual code verifying server, a virtual code generating module includes, as a detailed code generating function, a first function to generate the first code and a second function to generate the second code for enhancing the security, but may not include data on the correlation between the first code and the second code.

Further, according to another embodiment, the plurality of detailed codes may include: a first code generated based on a first count; and a second code generated based on a second count. The first count corresponds to the number of unit counts elapsed from the initial time point at which the virtual code generating function is run in the virtual code verifying server, and the second count is the number of unit counts elapsed from a time point (issued time point) at which the real card number of a specific user is issued. In other words, a first function for generating the first code is a function for providing a specific code value corresponding to the first count, and a second function for generating the second code is a function for providing a specific code value corresponding to the second count.

Accordingly, the virtual code is not duplicated regardless of the virtual code generating time and a user. The first code is set to any one code value (for example, a code value corresponding to a time point at which the generation of the virtual code is requested) of the codes matched at each count from the initial time point at which the first function is run in the virtual code verification server. Accordingly, the virtual code generating module generates a code value, which is varied at every virtual code generating time, as the first code for the same user. In addition, the second count value is always varied in each virtual code generating module at the same time point to prevent the real card number from being issued at the same time point. Accordingly, the virtual code generating module always generates a different second code for each user at the same time point. In other words, the first code has a different code value at each count and the second code has a different code value in the virtual code generating module (that is, an APP card application installed in a mobile terminal 10 of each user) of each user at the same time point. Accordingly, the virtual code generated by combining the first code and the second code is output without being duplicated, regardless of a user and a virtual code generation request time.

In addition, according to an embodiment, the virtual code generating module generates the first code and the second code by using a virtual security code. In other words, the virtual code generating module (or a first virtual code generating module to generate the virtual security code and a second virtual code generating module when the second virtual code generating module is included to generate a virtual code based on the virtual security code) applies the virtual security code to the number of counts elapsed from the second count or the current time point. In this case, the second virtual code generating module generates the first code by applying, to the first count, the number of counts, which is obtained by adding a count (that is, the count serving as a basis of the generation of the second code), which corresponds to the issued time point of the real card number, to the virtual security code.

In detail, the first virtual code generating module included in the virtual code generating module generates a virtual security code through One Time Password (OTP; a user authentication scheme employing a disposable password randomly generated instead of a fixed password). In other words, the first virtual code generating module generates an OTP by using, as key data, time data (that is, the virtual code generation requesting time point), an intrinsic card value, and a card security code (that is, a CVC or CVV of the real card number) of a real card number

The second virtual code generating module generates each detailed code using the virtual security code. In other words, the second virtual code generating module applies the virtual security code to a second count (that is, the number of counts shifted from the issued time point of the real card number) or the number (that is, the number of counts shifted from the current time point) of counts elapsed from a current time point. In this case, the second virtual code generating module generates the first code by applying, to the first count, the number of counts, which is obtained by adding a count (that is, the count serving as a basis of the generation of the second code), which corresponds to the issued time point of the real card number, to the virtual security code. Accordingly, as another person fails to recognize the sequence (that is, the first function and the second function) provided by the first code and the second code forming the virtual code, security may be improved.

The virtual code generating module generates a virtual code by combining the at least one detailed code through the detailed code combining function. A scheme of generating one virtual code by combining a plurality of detailed codes may include various schemes. For example, the detailed code combining function may generate a virtual code by alternately placing a first code having N digits and a second code having N digits. In addition, according to another embodiment, the detailed code generating function may be a function of placing the second code after the first code. As detailed codes included in the virtual function are increased, various detailed code generating functions may be generated.

The virtual code generating module generates an encrypted code from a virtual code based on the synchronized encryption algorithm (S242). In other words, the virtual code generating module generates the encrypted code from the virtual code based on a conversion pattern (that is, an encryption pattern) corresponding to a time point synchronized with a time point of the virtual code output application in the mobile terminal.

According to an embodiment, another person is prevented from recovering the virtual code due to the leakage of key data as the OTP code for code conversion, which is changed every moment, is used as the key data for encryption or decryption. In other words, as the virtual code generating module and the encryption module in the payment card perform encryption and decryption using the OPT code for code conversion, which is randomly generated through an OTP function at each moment, another person fails to detect key data used for encryption and decryption at a specific time point. Accordingly, this may solve the problem occurring in a conventional encryption scheme in which the key data used for encryption and decryption is fixed to allow another person to decrypt the encrypted code due to the leakage of the key data.

In detail, in the generating of the encrypted code (S242), an OTP code for code conversion is generated using an ID value (for example, the intrinsic number of the payment card) included in the payment card and the synchronized time data, and a relevant conversion pattern is applied to the OTP code for the code conversion, thereby converting the virtual code into the encrypted code. The virtual code generating module, which may have various rules (that is., encryption rules) for generating an encrypted code from a virtual code, may generate the encrypted code by applying a relevant encryption rule to the OTP code value for code conversion, which is generated at a time point at which the virtual code is generated. Accordingly, although another person detects the synchronized time data between the application and the payment card, and the identification value of the payment card, if the another person fails to recognize an algorithm of generating the OPT code for the code conversion, the another person fails to recover the virtual code from the encrypted code. In addition, if the another person fails to recognize the matching relationship between the OTP code for the code conversion and the conversion pattern (or the encryption rule), the another person fails to recover the virtual code from the encrypted code.

Thereafter, the virtual code generating module transmits the encrypted code to the mobile terminal (S243). In other words, the virtual code output application in the mobile terminal receives the encrypted code from the payment card. In this case, the virtual code generating module may transmit the encrypted code through various communication schemes.

The virtual code output application decrypts the encrypted code to the virtual code based on the encryption algorithm (S260). Thereafter, the virtual code output application outputs the virtual code on the screen (S280).

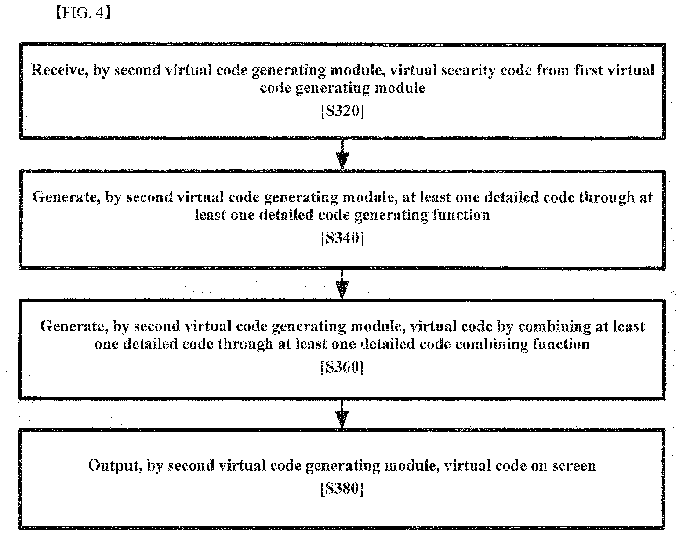

FIG. 4 is a flowchart illustrating the method for outputting the virtual code, which is generated from the payment card, according to another embodiment of the inventive concept.

Referring to FIG. 4, according to another embodiment of the inventive concept, the method for outputting the virtual code, which is generated from the payment card, includes receiving, by the second virtual code generating module, a virtual security code from the first virtual code generating module (S320; virtual security code receiving step), generating, by the second virtual code generating module, at least one detailed code through at least one detailed code generating function (S340), generating, by the second virtual code generating module, the virtual code through combination of at least one detailed code through at least one detailed code combining function (S360), and outputting, by the second virtual code generating module, the virtual code on the screen (S380). Hereinafter, the details of each step will be described in detail.

To generate and output a virtual code based on a virtual security code, there are required the first virtual code generating module to generate the virtual security code and the second virtual code generating module to generate the virtual code through a virtual code generating function. The payment card may include the first virtual code generating module and the second virtual code generating module to generate the virtual code and to output the virtual code to the outside in offline payment. However, when the payment card does not include a display, the payment card may use the display of the mobile terminal instead through a program for outputting the virtual code, to generate the virtual code. To prevent the virtual code from being leaked in the process of being transmitted to the mobile terminal for screen output, only a virtual security code generated in the first virtual code generating module is transmitted to the mobile terminal, and the virtual code is completed by the second virtual code generating module, which is included in the virtual code output application and identical to that of the payment card, and is output on the screen. In other words, the present embodiment is performed by the first virtual code generating module included in the payment card and the second virtual code generating module included in the virtual code output application. In particular, the present embodiment relates to a procedure of performing the second virtual code generating module in the virtual code output application.

First, the second virtual code generating module receives a virtual security code from the first virtual code generating module (S320; virtual security code receiving step). As the payment card is activated or the virtual code output application is run by the operation (for example, the operation of pressing a button provided in the payment card or of moving the payment card) of the user, the first virtual code generating module in the payment card transmits a virtual security code, which is used to generate a virtual code, to a mobile terminal having a virtual code output application including the second virtual code generating module.

The first virtual code generating module is embedded or installed in the payment card and includes a virtual security code generating function. According to an embodiment, the virtual security code is an OTP code generated by using time data (that is, the virtual code generation requesting time point), an intrinsic card value, and a card security code (that is, a CVC or CVV of the real card number) of a real card number. The intrinsic card value refers to an intrinsic value assigned to the payment card. In other words, the intrinsic card value is an intrinsic value assigned to the payment card corresponding to the electronic device. The first virtual code generating module may sore the intrinsic card value and a card security code therein to generate the virtual security code.

In detail, the first virtual code generating module generates a virtual security code through One Time Password (OTP; a user authentication scheme employing a disposable password randomly generated instead of a fixed password). In other words, the first virtual code generating module generates an OTP by using, as key data, time data (that is, the virtual code generation requesting time point), an intrinsic card value, and a card security code (that is, a CVC or CVV of the real card number) of a real card number

The virtual code output application receives the virtual security code from the payment card through wireless communication. According to an embodiment, the first virtual code generating module encrypts the virtual security code using a password as the key data and transmits the virtual security code. The virtual code output application having the encrypted virtual security code received therein performs decryption based on a payment card password stored therein, thereby detecting the virtual security code. The password may be set in the process of initially linking the payment card and the virtual code output application, or may be set as a serial number of the payment card. The mobile terminal may receive the virtual security code and provide the virtual code to the virtual code output application, through various wireless communication schemes.

The second virtual code generating module generates at least one detailed code through at least one detailed code generating function (S340). The second virtual code generating module included in the virtual code output application generates a plurality of detailed codes suitable for a unit count, at which the generation of the virtual code is requested, using the virtual security code received from the first virtual code generating module in the virtual code output application. In other words, the virtual code generating module may reflect the virtual security code in generating the first code and the second code without outputting the virtual code to the outside.

The plurality of detailed codes may include: a first code generated based on a first count; and a second code generated based on the second count. The first count is the number of unit counts elapsed from the initial time point at which the virtual code generating function is run in the virtual code verifying server, and the second count is the number of unit counts elapsed from a time point at which the real card number of a specific user is issued. In other words, a first function for generating the first code is a function for providing a specific code value corresponding to the first count, and a second function for generating a second code is a function for providing a specific code value corresponding to the second count.

In other words, the second virtual code generating module applies the virtual security code to a second count (that is, the number of counts shifted from the issued time point of the real card number) or the number (that is, the number of counts shifted from the current time point) of counts elapsed from a current time point. In this case, the second virtual code generating module generates the first code by applying, to the first count, the number of counts, which is obtained by adding a count (that is, the count serving as a basis of the generation of the second code), which corresponds to the issued time point of the real card number, to the virtual security code.

In detail, the second virtual code generating module generates the first code corresponding to the count obtained by adding the virtual security code to the issued time point of the real card number, and generates the second code of the count corresponding to the virtual security code. In other words, the first code and the second code are generated based on a count shifted by the virtual security code from a time point A, at which the real card number is issued to a first user. The count shifted from the time point A may be a count prior to or posterior to a count corresponding to the current time point, depending on the virtual security code value. Accordingly, as another person fails to recognize the providing sequence (that is, the first function and the second function) of the first code and the second code forming the virtual code, security may be improved.

The first code of the plurality of detailed codes is a code for setting a starting point of detecting the storage position of the real card number in the financial company server and virtual token verifying server, and the second code of the plurality of detailed codes may be a code for setting a detecting path of the storage position from the starting point depending on a specific detecting scheme. The searching scheme may be determined by a storage position detecting algorithm.

In addition, according to another embodiment, when a first code or a second code having N digits is generated using M characters, the virtual code generating function includes a first function or a second function to provide the first code or the second code generated by changing M^{N} codes at every unit count. In other words, the first function or the second function, which is a function to generate M^{N} codes, which are not duplicated as the count increases, generates a specific one of M^{N} codes as the first code or the second code at a count corresponding to a specific time point. Accordingly, the virtual code generating unit 110 generates a new virtual code at every unit count by generating a new detailed code (that is, the first code or the second code) at every unit count without duplicating the first code or the second code for a M^{N} count (that is, time length corresponding M^{N} count). Although the first code and the second code have the correlation for detecting the storage position of the real card number in the financial company server or the virtual token verifying server, the virtual code generator or a user client includes a first function to generate the first code and a second function to generate the second code for enhancing the security, but may not include data on the correlation between the first code and the second code.

In detail, as the virtual code generating function generates a first code or a second code having N digits using M characters, when M^{N} codes are used as the first code or the second code, each code is matched at every count from the initial time point at which the detailed code generating function is run. For example, when the count client is set to one second, the detailed code generating function matches different M^{N} codes at every second from the time point in which the detailed code generating function is initially run. In addition, when the period of using a specific detailed code generating function or a use period (e.g., the validate period of the payment card to generate the virtual code) of the virtual code generator is set to be a time length shorter than the time length (for example, M^{N} second when the first count is one second) corresponding to an M^{N} count, the duplicated code of the first code or the second code is not generated for the use period. In other words, when the count increases over time, and when the user requests the virtual code generator or the user client to generate a virtual code at a specific time point, the virtual code generator or the user client may generate, as the first code or the second code, a code value matched to a count corresponding to the specific time point.

The second virtual code generating module generates a virtual code through combination of at least one detailed code through at least one detailed code generating function (S360). A scheme of generating one virtual code by combining a plurality of detailed codes may include various schemes. For example, the detailed code generating function may generate a virtual code through a scheme of alternately placing a first code having N digits and a second code having N digits. In addition, according to another embodiment, the detailed code generating function may be a function of placing the second code after the first code. As detailed codes included in the virtual function are increased, various detailed code generating functions may be generated.

In addition, according to another embodiment, the virtual code combining function couple a fixed code with the first code and the second code. The virtual code may include a fixing code, which is not changed to distinguish between groups, together with a plurality of detailed codes. The fixed code includes a code for identifying the code or virtual code for determining a card company or card type corresponding to the real card number. The fixed code is connected to a specific position of the virtual code. For example, when the virtual code generating function is assigned for each card company or each card type, the virtual code generator or the user client uses the first six digits, which represent the card company or the card type, of card numbers. Accordingly, the financial company server or the virtual token verifying server may identify a specific card company or a specific card type to which the virtual code generator is applied in the virtual code generator or the user client. In other words, the fixed code is a code for determining the card company or card type corresponding to the real card number.

In addition, according to another embodiment, when the virtual code corresponds to a virtual token, the fixed code includes information or a code identifying that the virtual code corresponds to the virtual token. When a payment service server (for example, VAN server or PG company server) or a payment terminal (for example, kiosk device or POS device) receives only the virtual token, the payment service server or the payment terminal fails to distinguish among a real card number, a virtual card number directly matched to the real card number and used in the financial company server, or the virtual token to be verified in the virtual token verifying server. Accordingly, the virtual code output program includes information or a code identifying the virtual token in the fixed code. For example, the virtual code output program and the payment card may utilize, as the fixed code, a code that corresponds to an issuer identification number in the real card number of the user and allows the identification of the virtual token. For example, a new code matched to the IIN is assigned as the fixed code and used by using six digits corresponding to the IIN in the real card number. The virtual token verifying server may store the matching relation between the fixed code and the IIN, which is identical to the matching relation in the virtual code output program or the payment card. Accordingly, when the virtual token is received, the card company and the card type of the real card number may be detected based on the fixed code.

The fixed code is connected to a specific position of the virtual code. When the virtual code generating function is assigned for each card type group, the virtual token verifying server or the financial company server may determine the card type group only when first extracting the fixed code from the virtual code. Therefore, the fixed code may be connected to a specific position (for example, the same position as a position of the IIN of the real card number) in the virtual code such that the fixed code is separated without an additional function.

The second virtual code generating module outputs a virtual code on screen (S380). According to an embodiment, the virtual code output application outputs, in the form of a text, the virtual code on the screen. In addition, according to another embodiment, the virtual code output application generates the virtual code in the form of a bar code or a QR code to be output on the screen. When only the bar code or the QR code is used in offline payment, the virtual code output application generates the virtual code in the form of a bar code or a QR code to be output on the screen.

According to an embodiment, the virtual code output application may include a user interface for selecting the type of outputting the virtual code on the screen. For example, when a text output mode is output by a user, the virtual code output application outputs the virtual code in the form of a text. When an image output mode is output by the user, the virtual code output application outputs the virtual code in the form of a QR code or a bar code.

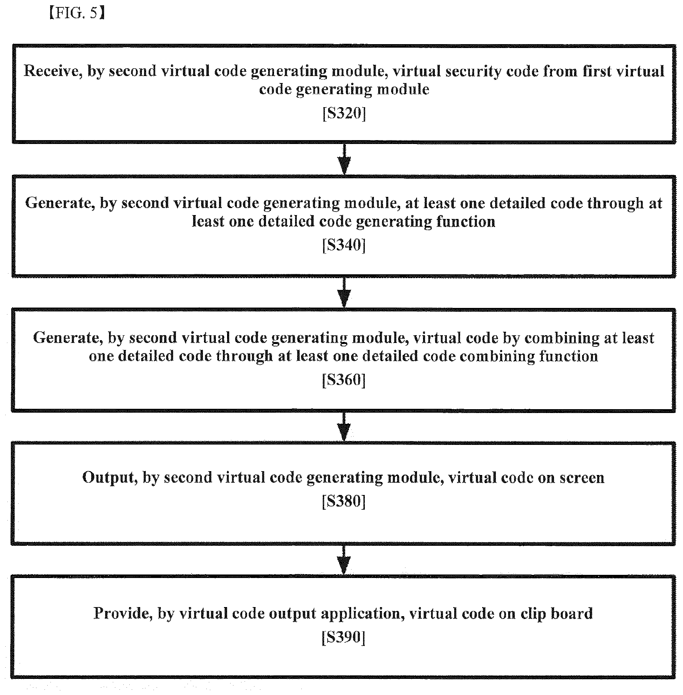

In addition, according to another embodiment, the virtual code output application further includes providing the virtual code to a clipboard (S390) as illustrated in FIG. 5. The virtual code provided to the clipboard is input to an online payment page in response to the operation of the user. For example, when the user performs online payment using the virtual code output on the screen by the virtual code output application, the user has to input the virtual code displayed on the screen of the virtual code output application into an online shopping application or a web browser. To directly input the virtual code to the screen of the application providing the payment page, the user has to repeat the procedure of alternately displaying, on the screen, the virtual code output application and the application for providing the payment page, so the user feels uncomfortable. Accordingly, the virtual code output application provides the virtual code data to the clipboard such that the virtual code may be easily inserted into another application.

In addition, according to another embodiment, a virtual security code is used to determine, in the virtual code verifying server, whether the virtual code transmitted through the payment card is normally produced. In other words, the virtual code verifying server extracts the virtual security code (that is, the received virtual security code) from the virtual code after receiving the virtual code obtained by a financial transaction terminal, and determines whether the virtual code is normal by identifying that the received virtual security code is normally generated at the financial transaction request time point, based on information (that is, the virtual security code generating function, an intrinsic card value, and a card security code a real card number) stored in the virtual code verifying server.

For example, when the virtual security code is used for the second count (that is, a clock is not included in the payment card to obtain a current time), after the virtual code verifying server (for example, the financial company server) extracts the virtual security code from the second code generated based on the virtual security code, the virtual code verifying server determines whether there is a value, which is matched to the virtual security code, of OTP numbers calculated by inputting a count in a specific range from a count, in which the virtual code is received, into the virtual security code generating function (that is, OTP function). The virtual code verifying server obtains a virtual security code value(that is, OTP function value) used to generate the second code by applying the inverse function of the second function to the second code, and finds out a count in which the same value as the virtual security code value is calculated. As there is a difference between a time point, at which the virtual security code is generated from the virtual code generating unit, and a time point, at which the virtual code verifying server receives the virtual security code, due to the transmission time or the delay of the virtual code, the count, in which the virtual code verifying server receives the virtual code, may not be matched to a count in which an OTP number corresponding to the virtual security code is generated. Accordingly, the virtual code verifying server allows an error range from the count in which the virtual code is received. Accordingly, even if another person hacks the second virtual code generating module to find out the first function and the second function, if the another person fails to obtain a normal virtual security code in real time, the virtual code matched to the financial transaction request time point is not generated.

As described above, according to an embodiment of the inventive concept, the method of outputting the virtual code, which is generated from the payment card, on the screen, is implemented in the form of a program (or application) to be stored in a medium, so as to be executed in combination with a computer which is hardware.

The above-described program is a code formed in a computer language, such as C, C ++, JAVA, or a machine language, that a central processing unit (CPU) of the computer can be read through a device interface of a computer, such that the computer reads the program and executes methods implemented with the program. The code may include a functional code related to a function defining function necessary for executing the methods, and include a control code related to an execution procedure necessary for the functions executed by the processor of the computer in a predetermined procedure. In addition, the code may further include a memory reference code indicating a location (address) of the internal or external memory of the computer, which is referred to by that additional information or media required for the computer's processor to execute the functions. In addition, when it is necessary for the processor of the computer to communicate with another computer or server at a remote place to execute the function, the code may further include a communication-related code indicating another computer or server at a remote place, a communication scheme with the another computer or server through the communication module of the computer, and an information or media type to be transmitted or received in communication.

The stored medium does not refer to a medium to store data for a short time such as a register, a cache, or a memory. A medium that stores data, but a medium which stores data semi-permanently and readable by a device. In detail, the storage medium includes, for example, a ROM, a RAM, a CD-ROM, a magnetic tape, a floppy-disk, or an optical data stage device, but the inventive concept is not limited thereto. In other words, the program may be stored in various recording media on various servers to be accessed by the computer, or various recording media on the computer of the user. In addition, the media may be distributed in computer systems connected over the network, and codes readable by the computer may be stored in the distribution scheme.

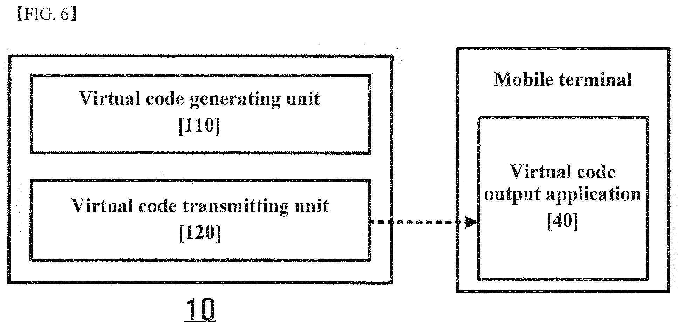

FIG. 6 is a block diagram illustrating the internal structure of the payment card to transmit the virtual code through short-range wireless communication, according to still another embodiment of the inventive concept.

Referring to FIG. 6, according to still another embodiment of the inventive concept, the payment card 10 include a virtual code generating unit 110 and a virtual code transmitting unit 120. Hereinafter, the duplicated description of the above components will be omitted.

The virtual code generating unit 110 generates a virtual code. The virtual code is generated as a code matched to a real card number through the virtual code generating function, which is stored in the payment card, at every unit count, and is used to detect the real card number in a financial company server or a virtual token verifying server. For example, the virtual code generating unit 110 includes a virtual code generating module (for example, a first virtual code generating module and a second virtual code generating module).

The virtual code transmitting unit 120 transmits a virtual code to the mobile terminal after recognizing the connection with the mobile terminal through the short-range wireless communication. The mobile terminal outputs, on the screen, the virtual code received from the payment card through the virtual code output application 40.

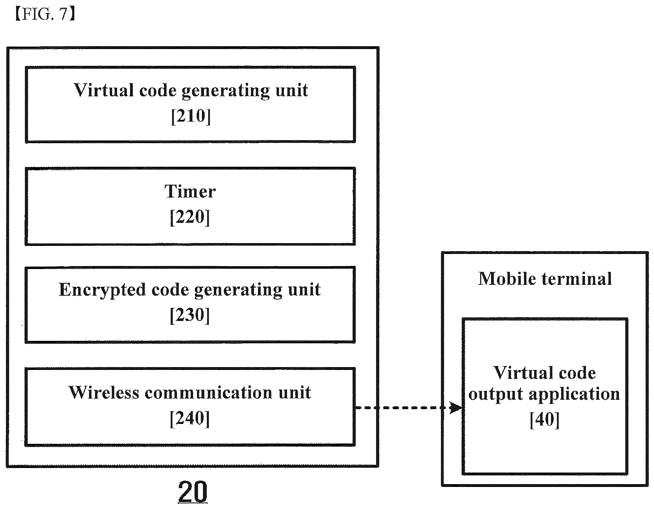

FIG. 7 is a block diagram illustrating the internal structure of the payment card to transmit an encrypted code based on a virtual code, according to still another embodiment of the inventive concept.

Referring to FIG. 7, according to another embodiment of the inventive concept, the payment card 20 includes a virtual code generating unit 210, a timer 220, an encrypted code generating unit 230, and a wireless communication unit 240. Hereinafter, the duplicated description of the above components will be omitted.

The virtual code generating unit 210 generates a virtual code. The virtual code is generated at every unit count by the virtual code generating function. The virtual code is generated as a code matched to a real card number through the virtual code generating function stored in the payment card, at every unit count, and is used to detect the real card number in a financial company server or a virtual token verifying server. For example, the virtual code generating unit 210 includes a virtual code generating module (for example, a first virtual code generating module and a second virtual code generating module).

The timer 220 synchronizes the time of the encryption algorithm through wireless communication with the mobile terminal.

The encrypted code generating unit 230 generates an encrypted code from the virtual code based on the synchronized encryption algorithm.

The wireless communication unit 240 transmits the encrypted code to the mobile terminal through wireless communication, and transmits synchronization condition data to the mobile terminal or receives the synchronization condition data from the mobile terminal. The mobile terminal outputs, on the screen, the virtual code received from the payment card through the virtual code output application 40.

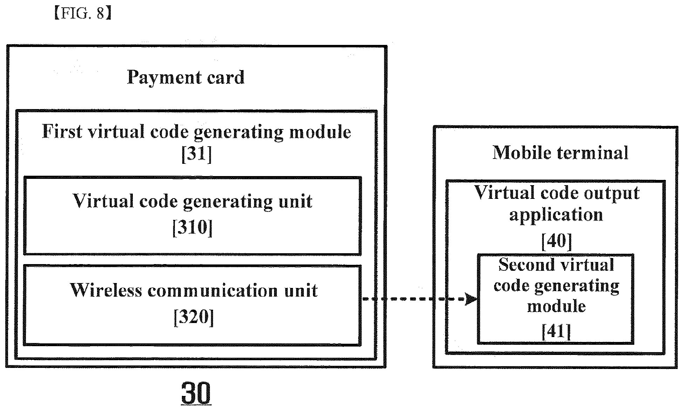

FIG. 8 is a block diagram illustrating the internal structure of the payment card to transmit a virtual security code according to still another embodiment of the inventive concept.

Referring to FIG. 8, according to still another embodiment of the inventive concept, the payment card 30 includes a first virtual code generating module 31. The first virtual code generating module 31 includes a virtual code generating unit 310 and a wireless communication unit 320. Hereinafter, the duplicated description of the above components will be omitted.

The virtual code generating unit 310 generates a virtual security code using a time value and the card security code of the real card number. The virtual security code is a disposable code having a specific digit number.

The wireless communication unit 320 transmits the virtual security code to the mobile terminal. A virtual code output application 40 including a second virtual code generating module 41 is embedded in or installed in the mobile terminal. The second virtual code generating module 41 generates a plurality of detailed codes matched to a unit count in which the generation of the virtual code is requested using the virtual security code, generates a virtual code by combining the plurality of detailed codes, and outputs the virtual code on the screen.

The virtual code is generated as a code matched to a real card number through the virtual code generating function, which is stored in the payment card, at every unit count, and is used to detect the real card number in a financial company server or a virtual token verifying server. The 'unit count' is set as a specific time interval and changed as the time interval is elapsed.

Although embodiments of the inventive concept have been described with reference to accompanying drawings, those skilled in the art should understand that various modifications are possible without departing from the technical scope of the inventive concept or without changing the subject matter of the inventive concept. Therefore, those skilled in the art should understand that the technical embodiments are provided for the illustrative purpose in all aspects and the inventive concept is not limited thereto.

As described above, the inventive concept has following various effects.

First, even if the payment card generating the virtual code has no display, the virtual code may be identified through the mobile terminal, so online payment or offline payment requiring the direct input of the virtual code or the recognition of a bar code or a QR code may be performed.

Second, another person may be prevented from intercepting the virtual code to be used for payment in the process of providing the virtual code to the mobile terminal.

Third, even if the payment card has no display, the virtual code may be visually identified, so the manufacturing costs of the payment card may be saved.

While the inventive concept has been described with reference to exemplary embodiments, it will be apparent to those skilled in the art that various changes and modifications may be made without departing from the spirit and scope of the inventive concept. Therefore, it should be understood that the above embodiments are not limiting, but illustrative.

## Claims

1. A method for outputting a virtual code, which is generated from a payment card, on a screen, the method comprising:
receiving, by a virtual code output application, the virtual code from the payment card after connecting the payment card with a mobile terminal through short-range wireless communication; and
outputting, by the virtual code output application, the virtual code on the screen,
wherein the virtual code output application is installed or embedded in the mobile terminal,
wherein the virtual code is generated as a code, which is matched to a real card number, through a virtual code generating function stored in the payment card, at every unit count, and is used to detect the real card number in a financial company server or a virtual token verifying server, and
wherein the unit count is set as a specific time interval and changed as the specific time interval is elapsed.

2. The method of claim 1, wherein the virtual code output application is activated when the short-range wireless communication is made between the payment card and the mobile terminal as the virtual code output application is run in background in the mobile terminal.

3. A method for outputting a virtual code, which is generated from a payment card, on a screen, the method comprising:
synchronizing, by a virtual code output application, time of an encryption algorithm through wireless communication between a virtual code output application and the payment card;
receiving, by the virtual code output application, an encrypted code generated from the payment card, wherein the encrypted code is obtained by encrypting the virtual code generated from the payment card based on the synchronized encryption algorithm;
decrypting, by the virtual code output application, the encrypted code to the virtual code based on the encryption algorithm; and
outputting, by the virtual code output application, the virtual code on the screen,
wherein the virtual code is generated as a code matched to a real card number through a virtual code generating function stored in the payment card, at every unit count, and is used to detect the real card number in a financial company server or a virtual token verifying server; and
wherein the unit count is set as a specific time interval and changed as the specific time interval is elapsed.

4. The method of claim 3, wherein the encryption algorithm is matched to an encryption rule every time.

5. The method of claim 3, wherein the payment card generates a plurality of detailed codes through a plurality of detailed code generating functions; and generates the virtual code by combining the plurality of detailed codes through a detailed code combining function,
wherein the detailed code generating function and the detailed code combining function are included in the virtual code generating function, and
wherein the plurality of detailed codes include:
a first code to set a starting point of detecting a storage position; and
a second code to set a search path to the storage position from the starting point according to a specific searching scheme.

6. A method for outputting a virtual code, which is generated from a payment card, on a screen, the method comprising:
receiving, by a second virtual code generating module, a virtual security code from a first virtual code generating module;
generating, by the second virtual code generating module, at least one detailed code through at least one detailed code generating function;
generating, by the second virtual code generating module, the virtual code through combination of the at least one detailed code through at least one detailed code combining function; and
outputting, by the second virtual code generating module, the virtual code on the screen,
wherein the virtual code is generated as a code matched to a real card number through a virtual code generating function stored in the payment card, at every unit count, and is used to detect the real card number in a financial company server or a virtual token verifying server,
wherein the virtual code generating function includes the detailed code generating function and the detailed code combining function,
wherein the first virtual code generating module is included in the payment card,
wherein the second virtual code generating module is included in a virtual code output application embedded or installed in a mobile terminal, generates a plurality of detailed codes matched to a unit count in which generation of the virtual code is requested using the virtual security code, generates the virtual code by combining the plurality of detailed codes, and outputs the virtual code on the screen, and
wherein the unit count is set as a specific time interval and changed as the specific time interval is elapsed.

7. The method of claim 6, wherein the plurality of detailed codes include:
a first code generated based on a first count; and
a second code generated based on a second count,
wherein the first count is the number of unit counts elapsed from an initial time point at which the virtual code generating function is run in a virtual code verifying server,
wherein the second count is the number of unit counts elapsed from a time point at which a real card number of a specific user is issued, and
wherein the generating of the at least one detailed code includes:
applying the virtual security code to the second count or the number of counts elapsed from a current time point.

8. The method of one of claim 1, 3, and 6, further comprising:
providing, by the virtual code output application, the virtual code to a clipboard,
wherein the virtual code provided on the clipboard is input to an online payment page in response to an operation of a user.

9. A payment card comprising:
a virtual code generating unit configured to generate a virtual code; and
a virtual code transmitting unit configured to transmit the virtual code to a mobile terminal after recognizing connection with the mobile terminal through short-range wireless communication,
wherein the mobile terminal outputs, on a screen, the virtual code received from a payment card through a virtual code output application,
wherein the virtual code is generated as a code matched to a real card number through a virtual code generating function stored in the payment card, at every unit count, and is used to detect the real card number in a financial company server or a virtual token verifying server, and
wherein the unit count is set as a specific time interval and changed as the specific time interval is elapsed.

10. A method for outputting a virtual code on a screen, the method comprising:
a virtual code generating unit configured to generate a virtual code at every unit count through a virtual code generating function;
a timer configured to synchronize time of an encryption algorithm through wireless communication with a mobile terminal;
an encrypted code generating unit configured to generate an encrypted code from the virtual code based on the synchronized encryption algorithm; and
a wireless communication unit configured to transmit the encrypted code to the mobile terminal through wireless communication, and to transmit synchronization condition data to the mobile terminal or to receive the synchronization condition data from the mobile terminal,
wherein the mobile terminal outputs, on a screen, the virtual code received from a payment card through a virtual code output application,
wherein the virtual code is generated as a code matched to a real card number through the virtual code generating function stored in the payment card, at every unit count, and is used to detect the real card number in a financial company server or a virtual token verifying server, and
wherein the unit count is set as a specific time interval and changed as the specific time interval is elapsed.

11. A payment card including a wireless communication function, the payment card comprising:
a first virtual code generating module,
wherein the first virtual code generating module includes:
a virtual security code generating unit configured to generate a virtual security code using a time value and a card security code of a real card number, wherein the virtual security code is a disposable code having a specific digit number; and
a wireless communication unit configured to transmit the virtual security code to a mobile terminal,
wherein the mobile terminal is embedded or installed with a virtual code output application including a second virtual code generating module,
wherein the second virtual code generating module generates a plurality of detailed codes matched to a unit count in which generation of the virtual code is requested using the virtual security code;
generates the virtual code by combining the plurality of detailed codes; and
outputs the virtual code on the screen,
wherein the virtual code is generated as a code matched to a real card number through a virtual code generating function, which is stored in the payment card, at every unit count, and is used to detect the real card number in a financial company server or a virtual token verifying server, and
wherein the unit count is set as a specific time interval and changed as the specific time interval is elapsed.

12. A program for providing a virtual code based on a payment code, wherein the program is connected with a computer, which is hardware, and stored in a medium to execute the method according to one of claim 1, claim 3, and claim 6.
